# FASCICULE DE BREVET EUROPEEN

(11) **EP 3 230 102 B1**
(45) Date de publication et mention de la délivrance du brevet: **01.08.2018**
(21) Numéro de dépôt: 15780928.6
(22) Date de dépôt: 25.09.2015
(51) Int. Cl.: B60K 1/00, B60K 11/06, H02K 9/04

(54) **GROUPE MOTOPROPULSEUR ELECTRIQUE REFROIDI PAR AIR**
LUFTGEKÜHLTE ELEKTRISCHE ANTRIEBSEINHEIT
AIR-COOLED ELECTRIC PROPULSION UNIT

(30) Priorité: 08.12.2014 FR 1462016
(43) Date de publication de la demande: 18.10.2017
(73) Titulaire: Renault S.A.S., 92100 Boulogne-Billancourt (FR)
(72) Inventeur: MEUNIER, Fabrice, F-92100 Boulogne Billancourt (FR); CHALMETTE, Bruno, F-92150 Suresnes (FR)
(86) Numéro de dépôt international: PCT/FR2015/052562
(87) Numéro de publication internationale: WO 2016/092162

(56) Documents cités:
- EP-A1- 0 416 468
- DE-A1-102010 040 491
- FR-A3- 3 000 180

## Description

La présente invention se rapporte de manière générale aux domaines de l'électrotechnique et de l'automobile, et concerne plus précisément le refroidissement d'un moteur électrique de traction d'un véhicule électrique ou hybride.

En effet dans un véhicule électrique, pour lequel le moteur électrique de traction a besoin d'être refroidi, il est possible d'utiliser un système de refroidissement à air, l'air ayant servi à refroidir le moteur devant être évacué en dehors du véhicule par un conduit d'évacuation. Ce conduit d'évacuation débouche généralement à l'air libre en partie basse du véhicule, avec le risque d'être obstrué. C'est pourquoi le brevet français FR2983433 propose un dispositif de protection du conduit d'évacuation d'un tel véhicule.

Cependant un tel dispositif de protection n'est pas suffisant. En effet le système de refroidissement d'un tel véhicule comporte un ventilateur intégré au moteur électrique, c'est-à-dire partageant l'arbre rotor du moteur électrique. Ce ventilateur présente un risque de fiabilité car il aspire les poussières et les projections d'eau en provenance du conduit d'évacuation d'air du système de refroidissement. De plus, on constate que le refroidissement par air d'un tel système de refroidissement perd en efficacité du fait des pertes de charge dues notamment à la complexité du circuit d'air destiné à refroidir le moteur électrique du véhicule.

Par ailleurs, les groupes motopropulseurs électriques de l'art antérieur présentent un encombrement important dans la direction de l'axe de rotation du moteur électrique, notamment du fait de l'encombrement du système de refroidissement du moteur. Un tel groupe motopropulseur a donc tendance à s'étendre vers l'avant dans le compartiment avant du véhicule, et à être vulnérable en cas de choc frontal.

Du document FR 3 000 180 A3, on connaît un groupe motopropulseur électrique comportant un moteur électrique logé dans un carter, ainsi qu'un circuit de refroidissement par air du moteur électrique, le circuit de refroidissement comportant un orifice d'entrée d'air et un orifice de sortie d'air dans le carter du moteur électrique, le circuit de refroidissement comportant en outre un ventilateur disposé en hauteur par rapport au moteur électrique, un conduit amont canalisant l'air en provenance du ventilateur vers le moteur électrique, et un conduit aval d'évacuation de l'air en provenance du moteur électrique vers le sol.

Un des buts de l'invention est de remédier à au moins une partie des inconvénients de la technique antérieure en fournissant un groupe motopropulseur électrique compact et dont le refroidissement par air se fait efficacement, avec notamment un ventilateur déporté du moteur électrique et situé en hauteur par rapport à celui-ci.

A cette fin, l'invention propose un groupe motopropulseur électrique comportant un réducteur et un moteur électrique logés dans des carters contigus, ainsi qu'un circuit de refroidissement par air dudit réducteur et dudit moteur électrique, ledit circuit de refroidissement comportant un orifice d'entrée d'air dans le carter du réducteur, des orifices de passage d'air dans une paroi de carter séparant ledit réducteur dudit moteur électrique, et un orifice de sortie d'air dans le carter dudit moteur électrique, ledit circuit de refroidissement comportant en outre un ventilateur disposé en hauteur par rapport audit réducteur et audit moteur électrique, un conduit amont canalisant l'air en provenance dudit ventilateur vers ledit réducteur , et un conduit aval d'évacuation de l'air en provenance dudit moteur électrique vers le sol.

Grâce à l'invention, le circuit de refroidissement du moteur électrique subit moins de pertes de charge, du fait du placement en hauteur du ventilateur du système de refroidissement. Cette configuration permet également de fiabiliser le fonctionnement du ventilateur et donc de s'affranchir d'un dispositif de protection du conduit aval d'évacuation de l'air, ce qui diminue encore les pertes de charge et simplifie le système de refroidissement. Le placement en hauteur du ventilateur permet également d'économiser une protection de celui-ci aux poussières et à l'humidité. De plus grâce à la mutualisation des carters du réducteur et du moteur électrique mis pour cela bout à bout avec une paroi de carter commune laissant passer l'air, et à l'externalisation du ventilateur par rapport au moteur électrique, on obtient un groupe motopropulseur compact transversalement. Les autres éléments du groupe motopropulseur tels que son électronique de puissance pouvant être disposés verticalement par rapport au bloc réducteur et moteur, on diminue ainsi la vulnérabilité du groupe motopropulseur selon l'invention lors de chocs frontaux.

Selon une caractéristique avantageuse du groupe motopropulseur selon l'invention, ledit ventilateur étant disposé au-dessus du carter dudit réducteur ou au-dessus du carter dudit moteur électrique, ledit conduit amont ne présente pas de rayon de courbure inférieur à 75 mm (millimètres). De même, avantageusement, ledit conduit aval ne présente pas de rayon de courbure inférieur à 38 mm.

Une telle configuration du conduit amont et/ou aval permet de limiter au mieux les pertes de charge du circuit d'air du système de refroidissement.

Selon une autre caractéristique avantageuse, ledit conduit amont présente une section élargie selon une direction transversale audit moteur électrique, et aplatie selon une direction axiale dudit moteur électrique, à l'entrée du carter dudit réducteur.

Cette caractéristique permet de limiter encore les pertes de charge à l'entrée du réducteur. En effet les conduits amont et aval présentent une section communément circulaire, mais l'entrée du réducteur étant étroite dans la direction de l'axe de rotation du moteur électrique, cette section s'aplatit en entrée du réducteur selon cette direction axiale. Pour ne pas ralentir l'air à l'entrée du réducteur, on élargit donc cette section aplatie dans une direction transversale au moteur électrique, orthogonale à cette direction axiale. Cela permet également de mieux distribuer l'air arrivant dans le moteur et donc de mieux le refroidir.

Selon encore une autre caractéristique avantageuse du groupe motopropulseur selon l'invention, lesdits orifices de passage d'air dans ladite paroi de carter s'étendent radialement entre d'une part un palier de support de l'arbre du rotor dudit moteur électrique, ledit palier étant présent dans ladite paroi de carter, et d'autre part les parois longitudinales du carter dudit moteur électrique, et angulairement sur une plage comprise entre 15° et 25°, de manière régulière sur ladite paroi de carter.

Cette caractéristique permet un meilleur refroidissement des pièces du moteur électrique tout en gardant une bonne tenue mécanique du rotor face aux vibrations.

Enfin avantageusement, une partie d'extrémité avale dudit conduit amont présente un soufflet apte à faciliter le positionnement dudit ventilateur.

Cette partie du conduit amont en forme de soufflet permet éventuellement de positionner différemment le ventilateur en fonction des contraintes d'encombrement du véhicule électrique concerné.

D'autres caractéristiques et avantages apparaîtront à la lecture d'un mode de réalisation préféré décrit en référence aux figures dans lesquelles :
- la figure 1 représente un groupe motopropulseur électrique selon l'invention, dans ce mode de réalisation préféré,
- la figure 2 représente une coupe de ce groupe motopropulseur électrique, selon une direction axiale parallèle à l'axe de rotation d'un moteur électrique du groupe motopropulseur,
- et la figure 3 représente une autre coupe de ce groupe motopropulseur électrique, selon une direction transversale, orthogonale à l'axe de rotation du moteur électrique.

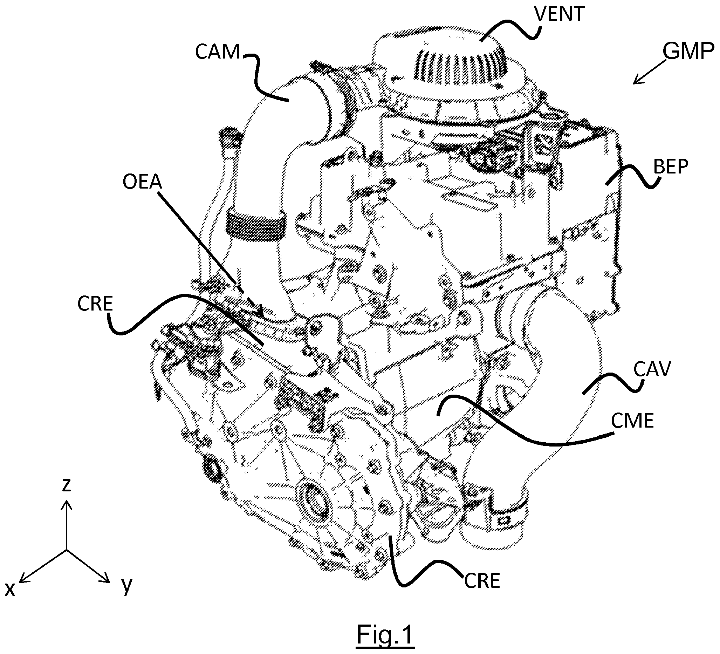

Selon un mode préféré de réalisation de l'invention représenté à la **figure 1**, le groupe motopropulseur électrique GMP selon l'invention comporte un réducteur logé dans un carter CRE de réducteur, un moteur électrique logé dans un carter CME de moteur, des boîtiers d'électronique de puissance BEP, ainsi qu'un système de refroidissement par air.

Le système de refroidissement par air comprend un ventilateur VENT situé en hauteur par rapport au réducteur et au moteur électrique, aspirant l'air de l'extérieur. Le terme « hauteur » se définit dans cette demande par rapport au sol sur lequel repose le véhicule comportant le groupe motopropulseur GMP. L'axe définissant cette hauteur est l'axe z sur la **figure 1**. Le ventilateur VENT doit donc être à plus haute altitude que le moteur et le réducteur du groupe motopropulseur GMP afin de faciliter la circulation de l'air. En effet dans ce mode de réalisation de l'invention, on permet au ventilateur VENT de ne pas avoir à vaincre plus de 10mbar (millibar) de pression d'air, afin qu'il puisse fonctionner efficacement, et apporter le débit nécessaire (environ 250m³ par heure) au refroidissement du moteur.

Le système de refroidissement par air comprend également un conduit amont CAM canalisant l'air en provenance du ventilateur VENT vers le réducteur, l'air entrant dans celui-ci via un orifice d'entrée d'air OEA ménagé dans le carter CRE du réducteur. L'air arrivant dans le réducteur passe ensuite dans le moteur électrique pour le refroidir, puis ressort par un orifice de sortie d'air OSA ménagé à l'extrémité du carter du moteur CME opposée au réducteur. L'air ressort dans la partie basse du véhicule par un conduit aval CAV d'évacuation de l'air amenant l'air en provenance de l'orifice de sortie d'air OSA vers le sol.

Comme visible sur la **figure 1**, les carters CRE de réducteur et CME de moteur électrique sont contigus, et les boîtiers d'électronique de puissance BEP sont également intégrés le plus possible au groupe motopropulseur électrique GMP, afin que celui-ci puisse être logé perpendiculairement à l'axe avant-arrière d'un véhicule intégrant ce groupe motopropulseur électrique GMP, dans le compartiment moteur du véhicule. Le groupe motopropulseur électrique GMP s'étend ainsi en largeur dans le compartiment moteur du véhicule, et en hauteur, ce qui limite sa vulnérabilité aux chocs frontaux.

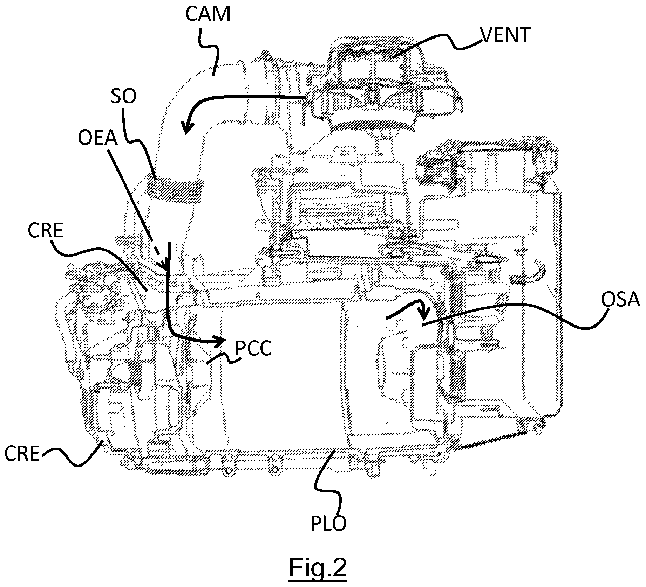

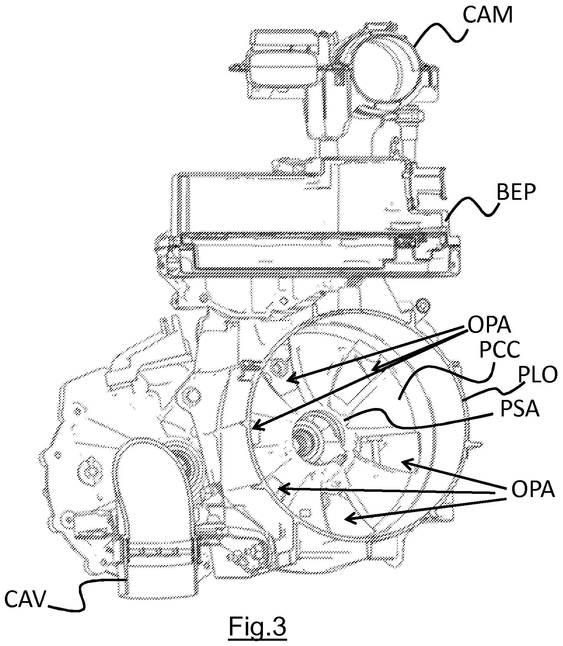

L'interface entre le carter CRE du réducteur et le carter CME du moteur est plus particulièrement visible sur la **figure 2****,** qui coupe selon la direction axiale x, parallèle à l'axe de rotation d'un moteur électrique du groupe motopropulseur, le groupe motopropulseur électrique GMP. Le réducteur et le moteur électrique, non représentés, sont séparés dans leurs carters respectifs par une paroi de carter PCC séparant le réducteur du moteur électrique. Cette paroi de carter PCC permet à l'air de s'écouler selon les flèches en trait plein de la **figure 2****,** grâce à des orifices de passage d'air OPA, présents sur la paroi de carter PCC, et visibles sur la **figure 3****,** qui coupe selon une direction transversale y, orthogonale à l'axe de rotation du moteur électrique, le groupe motopropulseur électrique GMP.

Afin d'optimiser le refroidissement du moteur électrique tout en assurant une bonne tenue aux vibrations du rotor du moteur électrique, la paroi de carter PCC est bombée vers le réducteur, et les orifices OPA de passage d'air s'étendent radialement entre un palier de support PSA de l'arbre du rotor, ménagé dans la paroi de carter PCC, et les parois longitudinales PLO du carter CME de moteur. Les parois longitudinales PLO s'étendent selon la direction axiale x et sont sensiblement cylindriques. Plus précisément les orifices de passage d'air OPA s'étendent depuis le palier de support PSA jusqu'à une partie périphérique de la paroi de carter PCC très proche des parois longitudinales PLO, par exemple cette partie périphérique est séparée du centre de l'axe du rotor d'une distance comprise entre 80% et 100% de la distance entre ce centre et les parois longitudinales PLO.

De plus les orifices OPA de passage d'air s'étendent angulairement sur une plage comprise entre 15° et 25°, et préférentiellement sur 20°, de manière régulière sur la paroi de carter PCC.

Afin de faciliter l'écoulement de l'air tout le long du circuit de refroidissement du groupe motopropulseur électrique GMP, le conduit amont CAM est configuré de manière à ce qu'il ne présente pas de rayon de courbure inférieur à 75 mm. Préférentiellement le conduit amont CAM présente un rayon de courbure toujours supérieur à 80 mm.

De même, le conduit aval CAV ne présente pas de rayon de courbure inférieur à 38 mm. Préférentiellement le conduit aval CAV présente un rayon de courbure toujours supérieur à 40 mm.

L'orifice d'entrée d'air OEA du carter CRE du réducteur étant étroite selon la direction x, le conduit amont CAM présente une section aplatie selon cette direction x à son extrémité débouchant sur le carter CRE du réducteur. Pour compenser ce rétrécissement axial, cette extrémité du conduit amont CAM et l'orifice d'entrée d'air OEA ont une ouverture transversale selon la direction y élargie par rapport au diamètre de la section du conduit amont CAM à l'autre extrémité du conduit raccordée au ventilateur VENT.

Par ailleurs un soufflet SO présent sur la partie d'extrémité avale du conduit amont CAM permet de disposer d'une certaine souplesse pour positionner le ventilateur VENT sur le dessus des boîtiers d'électronique de puissance BEP.

En effet, bien que dans ce mode de réalisation préféré de l'invention, le ventilateur VENT est positionné en hauteur par rapport au moteur électrique, sur les boîtiers d'électronique de puissance BEP, d'autres modes de réalisation de l'invention sont envisageables. En variante le ventilateur VENT est par exemple positionné sur le réducteur. Dans une autre variante de réalisation de l'invention, le conduit amont ne présente pas de soufflet, ou présente des orifices de passage d'air OPA de forme différente entre le réducteur et le moteur électrique.

## Revendications

1. Groupe motopropulseur électrique (GMP) comportant un réducteur et un moteur électrique logés dans des carters contigus (CRE, CME), ainsi qu'un circuit de refroidissement par air dudit réducteur et dudit moteur électrique, ledit circuit de refroidissement comportant un orifice d'entrée d'air (OEA) dans le carter (CRE) du réducteur, des orifices de passage d'air (OPA) dans une paroi de carter (PCC) séparant ledit réducteur dudit moteur électrique, et un orifice de sortie d'air (OSA) dans le carter (CME) dudit moteur électrique, ledit circuit de refroidissement comportant en outre un ventilateur (VENT) disposé en hauteur par rapport audit réducteur et audit moteur électrique, un conduit amont (CAM) canalisant l'air en provenance dudit ventilateur (VENT) vers ledit réducteur, et un conduit aval (CAV) d'évacuation de l'air en provenance dudit moteur électrique vers le sol.

2. Groupe motopropulseur (GMP) selon la revendication 1, **caractérisé en ce que**, ledit ventilateur (VENT) étant disposé au-dessus du carter (CRE) dudit réducteur ou au-dessus du carter (CME) dudit moteur électrique, ledit conduit amont (CAM) ne présente pas de rayon de courbure inférieur à 75 mm.

3. Groupe motopropulseur (GMP) selon la revendication 1 ou 2, **caractérisé en ce que** ledit conduit aval (CAV) ne présente pas de rayon de courbure inférieur à 38 mm.

4. Groupe motopropulseur (GMP) selon l'une quelconque des revendications 1 à 3, **caractérisé en ce que** ledit conduit amont (CAM) présente une section élargie selon une direction transversale audit moteur électrique, et aplatie selon une direction axiale dudit moteur électrique, à l'entrée du carter (CRE) dudit réducteur.

5. Groupe motopropulseur (GMP) selon l'une quelconque des revendications 1 à 4, **caractérisé en ce que** lesdits orifices de passage d'air (OPA) dans ladite paroi de carter (PCC) s'étendent radialement entre d'une part un palier de support (PSA) de l'arbre du rotor dudit moteur électrique, ledit palier étant présent dans ladite paroi de carter (PCC), et d'autre part les parois longitudinales (PLO) du carter dudit moteur électrique, et angulairement sur une plage comprise entre 15° et 25°, de manière régulière sur ladite paroi de carter (PCC).

6. Groupe motopropulseur (GMP) selon l'une quelconque des revendications 1 à 5, **caractérisé en ce qu'**une partie d'extrémité avale dudit conduit amont (CAM) présente un soufflet (SO) apte à faciliter le positionnement dudit ventilateur (VENT).

## Patentansprüche

1. Elektrische Antriebseinheit (GMP), umfassend ein Getriebe und einen Elektromotor, die in aneinandergrenzenden Gehäusen (CRE, CME) untergebracht sind, sowie einen Luftkühlkreislauf des Getriebes und des Elektromotors, wobei der Kühlkreislauf eine Lufteintrittsöffnung (OEA) im Gehäuse (CRE) des Getriebes, Luftdurchtrittsöffnungen (OPA) in einer Gehäusewand (PCC), die das Getriebe von dem Elektromotor trennt, und eine Luftaustrittsöffnung (OSA) im Gehäuse (CME) des Elektromotors umfasst,
wobei der Kühlkreislauf ferner ein Gebläse (VENT), das in Bezug auf das Getriebe und den Elektromotor in der Höhe angeordnet ist, eine stromaufseitige Leitung (CAM), die die vom Gebläse (VENT) kommende Luft zum Getriebe leitet, und eine stromabseitige Leitung (CAV) zur Abführung der vom Elektromotor kommenden Luft zum Boden umfasst.

2. Antriebseinheit (GMP) nach Anspruch 1, **dadurch gekennzeichnet, dass**, während das Gebläse (VENT) oberhalb des Gehäuses (CRE) des Getriebes oder oberhalb des Gehäuses (CME) des Elektromotors angeordnet ist, die stromaufseitige Leitung (CAM) keinen Krümmungsradius von weniger als 75 mm aufweist.

3. Antriebseinheit (GMP) nach Anspruch 1 oder 2, **dadurch gekennzeichnet, dass** die stromabseitige Leitung (CAV) keinen Krümmungsradius von weniger als 38 mm aufweist.

4. Antriebseinheit (GMP) nach einem der Ansprüche 1 bis 3, **dadurch gekennzeichnet, dass** die stromaufseitige Leitung (CAM) am Einlass des Gehäuses (CRE) des Getriebes einen Querschnitt aufweist, der entlang einer Richtung quer zum Elektromotor aufgeweitet ist und entlang einer axialen Richtung des Elektromotors abgeflacht ist.

5. Antriebseinheit (GMP) nach einem der Ansprüche 1 bis 4, **dadurch gekennzeichnet, dass** sich die Luftdurchtrittsöffnungen (OPA) in der Gehäusewand (PCC) radial zwischen einerseits einem Stützlager (PSA) der Welle des Rotors des Elektromotors, wobei sich das Lager in der Gehäusewand (PCC) befindet, und andererseits den Längswänden (PLO) des Gehäuses des Elektromotors und winklig über einen Bereich zwischen 15° und 25° gleichmäßig über die Gehäusewand (PCC) erstrecken.

6. Antriebseinheit (GMP) nach einem der Ansprüche 1 bis 5, **dadurch gekennzeichnet, dass** ein stromabseitiger Endteil der stromaufseitigen Leitung (CAM) einen Faltenbalg (SO) aufweist, der geeignet ist, die Positionierung des Gebläses (VENT) zu erleichtern.

## Claims

1. Electric powertrain (GMP) comprising a speed reducer and an electric motor housed in contiguous casings (CRE, CME), together with an air cooling circuit for said speed reducer and said electric motor, said cooling circuit comprising an opening (OEA) for the inlet of air into the casing (CRE) of the speed reducer, openings (OPA) for the passage of air in a casing wall (PCC) separating said speed reducer from said electric motor, and an air outlet opening (OSA) in the casing (CME) of said electric motor, said cooling circuit additionally comprising a fan (VENT) placed at a height relative to said speed reducer and said electric motor, an upstream conduit (CAM) channeling the air from said fan (VENT) toward said speed reducer, and a downstream conduit (CAV) for the outlet of the air from said electric motor toward the ground.

2. Powertrain (GMP) according to Claim 1, **characterized in that**, said fan (VENT) being placed above the casing (CRE) of said speed reducer or above the casing (CME) of said electric motor, said upstream conduit (CAM) has no radius of curvature smaller than 75 mm.

3. Powertrain (GMP) according to Claim 1 or 2, **characterized in that** said downstream conduit (CAV) has no radius of curvature smaller than 38 mm.

4. Powertrain (GMP) according to any of Claims 1 to 3, **characterized in that** said upstream conduit (CAM) has a cross section which is enlarged in a transverse direction relative to said electric motor, and flattened in an axial direction of said electric motor, at the inlet to the casing (CRE) of said speed reducer.

5. Powertrain (GMP) according to any of Claims 1 to 4, **characterized in that** said air passage openings (OPA) in said casing wall (PCC) extend radially between, on the one hand, a support bearing (PSA) of the rotor shaft of said electric motor, said bearing being present in said casing wall (PCC), and, on the other hand, the longitudinal walls (PLO) of the casing of said electric motor, and extend angularly over a range from 15° to 25°, in a regular manner, on said casing wall (PCC).

6. Powertrain (GMP) according to any of Claims 1 to 5, **characterized in that** a downstream end part of said upstream conduit (CAM) has a bellows (SO) to facilitate the positioning of said fan (VENT).
